# EUROPEAN PATENT APPLICATION

(11) **EP 4 819 664 A1**
(43) Date of publication of application: **07.10.2026**
(21) Application number: 23959659.6
(22) Date of filing: 27.11.2023
(51) Int. Cl.: H04W 24/02

(54) **METHOD FOR SENSING, AND COMMUNICATION DEVICE**

(71) Applicant: GUANGDONG OPPO MOBILE TELECOMMUNICATIONS CORP., LTD., Dongguan, Guangdong 523860 (CN)
(72) Inventor: WANG, Yaxin, Dongguan, Guangdong 523860 (CN); GUO, Yali, Dongguan, Guangdong 523860 (CN)
(74) Representative: RGTH
(86) International application number: PCT/CN2023/134265
(87) International publication number: WO 2025/111732

(57) **Abstract**

Provided are a method for sensing, and a communication device. The method comprises: a first network element receiving a first message sent by a second network element, wherein the first message includes identification information of a first terminal device and first indication information, the first indication information being used for indicating that the sensing target is a target associated with the first terminal device.

## Description

### TECHNICAL FIELD

The present application relates to the field of communication technologies, more specifically, to a method for sensing and a communication device.

### BACKGROUND

With the development of communication technologies, sensing functions have been introduced into a communication system, to sense a sensing target. If the sensing target is not a terminal device (for example, the sensing target is a user of the terminal device), there is currently no suitable method for how to perform sensing.

### SUMMARY

The present application provides a method for sensing and a communication device. Various aspects involved in the present application are described as follows.

In a first aspect, a method for sensing is provided, and the method includes: receiving, by a first network element, a first message transmitted by a second network element, where the first message includes identification information of a first terminal device and first indication information, and the first indication information is used to indicate that a sensing target is a target associated with the first terminal device.

In a second aspect, a method for sensing is provided, and the method includes: transmitting, by a second network element, a first message to a first network element, where the first message includes identification information of a first terminal device and first indication information, and the first indication information is used to indicate that a sensing target is a target associated with the first terminal device.

In a third aspect, a method for sensing is provided, and the method includes: receiving, by a first terminal device, a second message transmitted by a first network element, where the second message includes first indication information, and the first indication information is used to indicate that a sensing target is a target associated with the first terminal device.

In a fourth aspect, a communication device is provided, the communication device is a first network element, and the first network element includes: a first communication module, configured to receive a first message transmitted by a second network element, where the first message includes identification information of a first terminal device and first indication information, and the first indication information is used to indicate that a sensing target is a target associated with the first terminal device.

In a fifth aspect, a communication device is provided, the communication device is a second network element, and the second network element includes: a first communication module, configured to transmit a first message to a first network element, where the first message includes identification information of a first terminal device and first indication information, and the first indication information is used to indicate that a sensing target is a target associated with the first terminal device.

In a sixth aspect, a communication device is provided, the communication device is a first terminal device, and the first terminal device includes: a first communication module, configured to receive a second message transmitted by a first network element, where the second message includes first indication information, and the first indication information is used to indicate that a sensing target is a target associated with the first terminal device.

In a seventh aspect, a communication device is provided, and the communication device includes: a transceiver, a memory, and a processor. The memory is configured to store a program, and the processor is configured to invoke the program stored in the memory and control the transceiver to receive or transmit a signal, to enable the communication device to perform the method according to any one of the first to third aspects.

In an eighth aspect, an apparatus is provided, and the apparatus includes a processor. The processor is configured to invoke a program from a memory, to enable the apparatus to perform the method according to any one of the first to third aspects.

In a ninth aspect, a chip is provided, and the chip includes a processor. The processor is configured to invoke a program from a memory, to enable a device equipped with the chip to perform the method according to any one of the first to third aspects.

In a tenth aspect, a computer-readable storage medium is provided, and has a program stored thereon, which enables a computer to perform the method according to any one of the first to third aspects.

In an eleventh aspect, a computer program product is provided, and the computer program includes a program, which enables a computer to perform the method according to any one of the first to third aspects.

In a twelfth aspect, a computer program is provided, and the computer program enables a computer to perform the method according to any one of the first to third aspects.

In the embodiments of the present application, the first indication information is added to a sensing-related message. The first indication information is used to indicate that the sensing target is not a terminal device but a target associated with the terminal device (e.g., an object or environment surrounding the terminal device). The introduction of the first indication information enables network elements involved in a sensing procedure to clearly identify that the target of the current sensing is not the terminal device, thereby triggering the network elements to execute an adapted sensing procedure.

### BRIEF DESCRIPTION OF THE DRAWINGS

FIG. 1 is a schematic diagram of a system architecture of a wireless communication system to which embodiments of the present application can be applied.
FIG. 2 is a system architecture diagram of a 5th generation (5G) communication system.
FIG. 3 is a schematic diagram of another communication system architecture provided by embodiments of the present application.
FIG. 4 is a schematic diagram of a sensing scenario to which embodiments of the present application can be applied.
FIG. 5 is a schematic flowchart of a method for sensing provided by an embodiment of the present application.
FIG. 6 is a schematic flowchart of a method for sensing provided by another embodiment of the present application.
FIG. 7 is a schematic flowchart of a method for sensing provided by yet another embodiment of the present application.
FIG. 8 is a schematic flowchart of a method for sensing provided by yet another embodiment of the present application.
FIG. 9 is a schematic flowchart of a method for sensing provided by yet another embodiment of the present application.
FIG. 10 is a schematic flowchart of a method for sensing provided by yet another embodiment of the present application.
FIG. 11 is a schematic flowchart of a method for sensing provided by still another embodiment of the present application.
FIG. 12 is a schematic structural diagram of a communication device provided by an embodiment of the present application.
FIG. 13 is a schematic structural diagram of a communication device provided by another embodiment of the present application.
FIG. 14 is a schematic structural diagram of a communication device provided by yet another embodiment of the present application.
FIG. 15 is a schematic diagram of an apparatus to which embodiments of the present application can be applied.

### DETAILED DESCRIPTION

The technical solutions of the present application will be described below with reference to the accompanying drawings.

### Wireless communication system

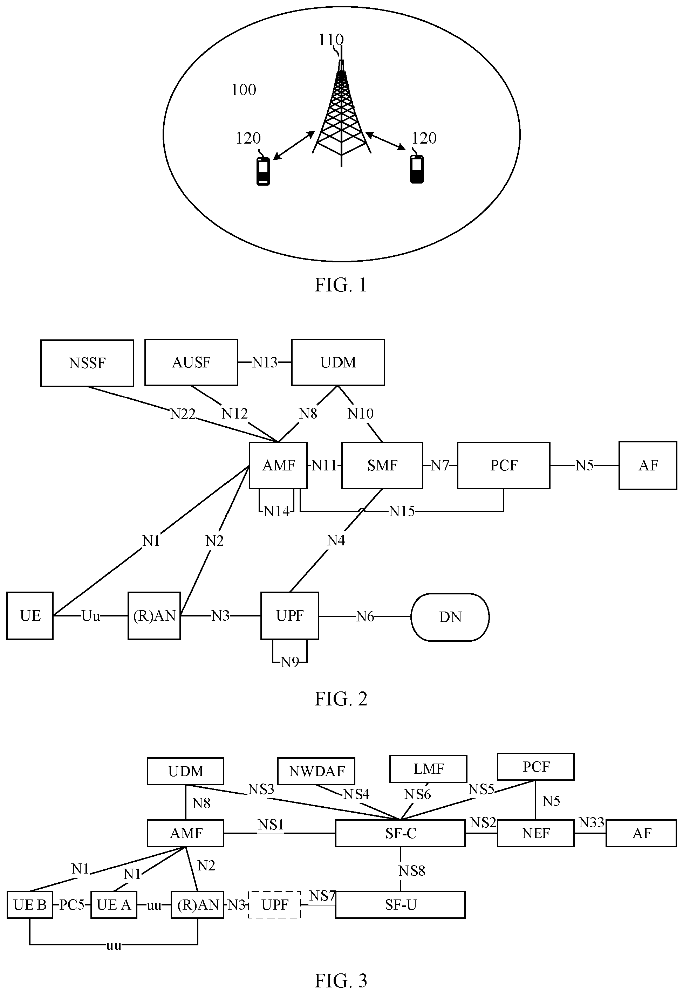

FIG. 1 is a schematic diagram of a system architecture of a wireless communication system 100 to which embodiments of the present application can be applied. The wireless communication system 100 may include a network device 110 and terminal devices 120. The network device 110 may be a device that communicates with the terminal devices 120. The network device 110 may provide network coverage for a specific geographical area, and may communicate with the terminal devices 120 located within the coverage area. The terminal devices 120 may access a network (e.g., a wireless network) via the network device 110. Optionally, the wireless communication system 100 may further include other network entities such as a network controller and a mobility management entity, which is not limited in the embodiments of the present application.

It should be understood that the technical solutions in the embodiments of the present application may be applied to various communication systems, such as a 5G system or new radio (NR), a long term evolution (LTE) system, an LTE frequency division duplex (FDD) system, an LTE time division duplex (TDD) system. The technical solutions provided by the present application may also be applied to future communication systems, such as a 6th generation mobile communication system, a satellite communication system.

A terminal device in the embodiments of the present application may also be referred to as a user equipment (UE), an access terminal, a user unit, a user station, a mobile site, a mobile station (MS), a mobile terminal (MT), a remote station, a remote terminal, a mobile device, a user terminal, a terminal, a wireless communication device, a user agent, or a user apparatus. In the embodiments of the present application, the terminal device may refer to a device that provides voice and/or data connectivity for users, and may be used to connect people, things, and machines, such as a handheld device with wireless connection capabilities, an in-vehicle device with wireless connection capabilities. In the embodiments of the present application, the terminal device may be a mobile phone, a pad, a laptop computer, a handheld computer, a mobile internet device (MID), a wearable device, a virtual reality (VR) device, an augmented reality (AR) device, a wireless terminal in industrial control, a wireless terminal in self-driving, a wireless terminal in remote medical surgery, a wireless terminal in a smart grid, a wireless terminal in transportation safety, a wireless terminal in a smart city, a wireless terminal in a smart home, or the like. Optionally, the terminal device may be used to act as a base station. For example, the terminal device may act as a scheduling entity, which provides sidelink signals between terminal devices in vehicle to everything (V2X) or device to device (D2D), or the like. For example, a cellular phone and a car communicate with each other by using sidelink signals. A cellular phone and a smart home device communicate with each other without relaying communication signals via a base station.

In the embodiments of the present application, the network device may be a device for communicating with terminal devices. The network device may be, for example, an access network device or wireless access network device. For example, the network device may be a base station. The base station may broadly cover the following various names, or be replaced with the following names, such as: node B (NodeB), evolved base station (evolved NodeB, eNB), next generation base station (next generation NodeB, gNB), relay station, access point, transmitting and receiving point (TRP), transmitting point (TP), home base station, network controller, access node, wireless node, access point (AP), transmission node, transceiver node, base band unit (BBU), remote radio unit (RRU), active antenna unit (AAU), remote radio head (RRH), central unit (CU), distributed unit (DU), positioning node. The base station may be a macro base station, a micro base station, a relay node, a donor node, or the like, or a combination thereof.

Terminal devices can communicate with each other via a sidelink. Sidelink communication may also be referred to as proximity services (ProSe) communication, unilateral communication, sidelink communication, or D2D communication.

### 5G network system architecture and sensing network element

The 5G network system architecture is illustrated in FIG. 2. In the system architecture, a UE establishes an access stratum connection with an access node (AN) via an air interface (Uu interface) for exchanging access stratum messages and wireless data transmission. The UE establishes a non-access stratum (NAS) connection with an access and mobility management function (AMF) via an N1 interface for exchanging NAS messages. In addition to performing mobility management for the UE, the AMF is further responsible for forwarding session management-related messages between the UE and an SMF. A policy control function (PCF) is responsible for formulating policies related to mobility management, session management, and charging for the UE. A user plane function (UPF) performs data transmission with an external data network (DN) via an N6 interface and performs data transmission with an AN via an N3 interface.

Current cellular networks (including 5G network) are primarily used for wireless data transmission and communication. However, the wireless electromagnetic wave signals used by cellular networks may not only be used for wireless data transmission and communication but also possess environmental sensing capabilities. For example, the wireless electromagnetic wave signals of the cellular networks may be used for user action or gesture recognition, respiration monitoring, movement speed measurement of the terminal device, environmental imaging, weather monitoring. Therefore, the cellular networks may also be used to obtain sensing information.

Currently, there is a discussion on supporting sensing capabilities in B5G (beyond 5G) networks. For example, sensing capabilities may be supported in a 3rd generation partnership project (3GPP) network by adding a sensing network element (or sensing control network element) and corresponding procedures. FIG. 3 illustrates an example of a network system architecture that supports sensing capabilities. As illustrated in FIG. 3, a sensing network element (i.e., the sensing function (SF) in FIG. 3) is added to a core network to handle sensing-related operations. After an application transmits a sensing request to the core network in the 3GPP network, the core network may select a correct base station or an auxiliary terminal device via the sensing network element or the AMF, and trigger the base station or the auxiliary terminal device to enable sensing-related radio measurement capabilities, to initiate the measurement of sensing information and generate sensing results.

Main sensing links or sensing methods in integrated communication and sensing scenarios include the following:
1. base station echo sensing link (single base station sensing): a base station transmits a sensing signal and receives an echo signal;
2. inter-base station sensing link (base station-to-base station sensing): base station B receives a sensing signal transmitted by base station A;
3. air interface uplink sensing link (terminal device-to-base station uplink sensing): a base station receives a sensing signal transmitted by a terminal device;
4. air interface downlink sensing link (terminal device-to-base station downlink sensing): a terminal device receives a sensing signal transmitted by a base station;
5. terminal device echo sensing link (single terminal device sensing): a terminal device transmits a sensing signal and receives an echo signal; and
6. inter-terminal device sensing link (terminal device-to-terminal device sensing): terminal device B receives a sensing signal transmitted by terminal device A.

Currently, given large volume of data exchanged between a terminal device and a sensing network element, the terminal device may transmit data with the sensing network element through the user plane to complete the necessary interactions for sensing services. For example, the terminal device may transmit sensing data to the sensing network element through a UPF by establishing a protocol data unit (PDU) session (which may be a special PDU session). Taking the sensing network element as the SF illustrated in FIG. 3 as an example, in some implementations, the sensing network element may include an SF-C (control plane network element of the SF) and an SF-U (user plane network element of the SF). The terminal device may, for example, transmit sensing data to the SF-U through the UPF. Of course, SF, SF-C, and SF-U are only examples of the names of the network element, and other names may be used, or the network element may be co-located with a location management function (LMF), which is not specifically limited in the embodiments of the present application. Meanwhile, for some sensing tasks, for saving network resources, the sensing node may be allowed to perform partial processing and only transmit a small volume of data to the SF for processing through the control plane. Further, taking into account situations where multiple terminal devices may be required to assist with perception, a terminal device is allowed to discover and select other terminal devices via a PC5 interface and take these other terminal devices as sensing nodes to complete the sensing task.

A sensing task needs to determine a sensing target. When the sensing target is a terminal device, the corresponding terminal device may be found directly through identity (ID) information of the terminal device or internet protocol (IP) address information of the terminal device. Then, the terminal device may be used as a transmitter or a receiver of a sensing signal, and sensing nodes surrounding the terminal device may be selected to complete the sensing task. However, when the sensing target is not a terminal device, there is currently no clear solution for how to perform sensing. For example, in scenarios such as health monitoring and motion tracking, the target to be sensed is a user wearing a mobile phone, not the mobile phone itself. In such scenarios, it is currently unclear how to indicate that the sensing target is not the terminal device.

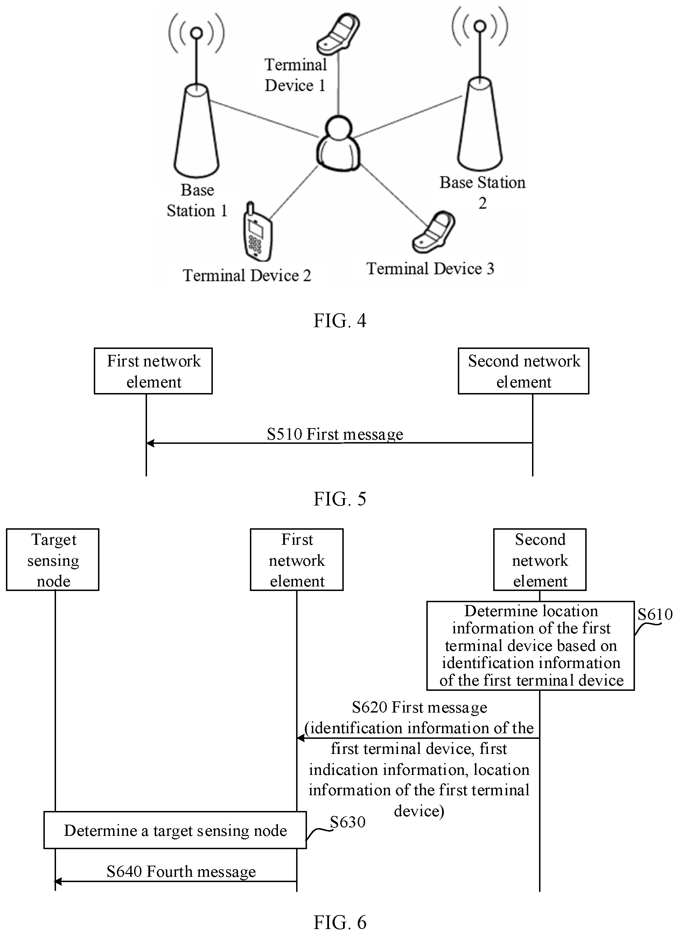

For another example, referring to the sensing scenario illustrated in FIG. 4, assume that the sensing target is the user in the middle, and the user may carry a terminal device (not illustrated in FIG. 4). The terminal device carried by the user may not be suitable as a sensing node due to issues such as signal obstruction because the terminal device is close to the sensing target. Therefore, to achieve sensing of the user, it is necessary to select sensing nodes near the user. For example, base stations (e.g., base station 1 and base station 2 in FIG. 4) and a terminal device (e.g., terminal device 1 in FIG. 4) near the user may be selected to transmit sensing signals, and terminal devices (e.g., terminal device 2 and terminal device 3 in FIG. 4) near the user can be selected to receive sensing signals, to complete the sensing procedure. However, it is currently unclear how to select and configure the sensing nodes surrounding the user.

For the above problem, the embodiments of the present application will be described in detail as follows.

FIG. 5 is a schematic flowchart of a method for sensing provided by the embodiments of the present application. Referring to FIG. 5, in step S510, a first network element receives a first message transmitted by a second network element.

In some implementations, the first network element may be a network element that receives a sensing request. For example, the first network element is a gateway mobile location centre (GMLC), an access and mobility management function (AMF), or an NEF. The second network element may be a network element that transmits the sensing request. The second network element may also be referred to as a consumer network function (consumer NF). The second network element may, for example, be a terminal device, a network exposure function (NEF), an application function (AF), or an AF client.

In some implementations, the first network element may be a network element for a sensing service. For example, the first network element may be an SF. Alternatively, the first network element may be an LMF (i.e., the SF and LMF are co-located). The second network element may be a network element that receives a sensing request. For example, the second network element may be a GMLC, an AMF, or an NEF.

The first message may be a sensing-related message. In other words, the first message is used to request a sensing service, or assign a sensing task, or assign configuration information of a sensing task.

The first message may include identification information of a first terminal device. The identification information of the first terminal device may be a standard UE ID, such as a subscription permanent identifier (SUPI) or a generic public subscription identifier (GPSI). Alternatively, the identification information of the first terminal device may also be identification information of a low-power device, such as a wearable device or an ambient internet of things (AIoT) tag device. That is, a low-power wearable device may be installed on the sensing target, or a tag may be attached to the sensing target, to identify the sensed target.

In addition to the identification information of the first terminal device, the first message may further include first indication information. The first indication information is used to indicate that the sensing target is a target associated with the first terminal device. In other words, the first indication information is used to indicate that the sensing target is not the first terminal device itself. Alternatively, the first indication information indicates that the sensing target is not a terminal device. Alternatively, the first indication information is used to instruct the core network to trigger a sensing task or a sensing procedure corresponding to a non-terminal device. Adding the first indication information to the first message enables the network elements involved in the sensing procedure to clearly identify that the target of the current sensing is not the terminal device, thereby triggering the network elements to execute an adapted sensing procedure. It can be understood that, although the first terminal device is not the sensing target, adding the identification information of the first terminal device in the first message may serve to identify or locate the sensing target, thereby helping to accurately sense the non-terminal device target.

In some implementations, the first indication information is used to indicate that the sensing target is an object surrounding the first terminal device. For example, when it is necessary to monitor health information or motion information of the user of the first terminal device, the sensing target is the user of the first terminal device. In this case, the identification information of the first terminal device and the first indication information may be carried in the first message, to indicate that the sensing target is not the first terminal device, but the user wearing the first terminal device.

In some implementations, the first indication information is used to indicate that the sensing target is environment surrounding the first terminal device. For example, when it is necessary to sense whether there is an intruder in an indoor environment, the sensing target is the indoor environment. In this case, the first terminal device may be installed in the indoor environment, and the identification information of the first terminal device and the first indication information may be carried in the first message, to indicate that the sensing target is not the first terminal device, but the indoor environment in which the first terminal device is located.

As mentioned above, the first terminal device may be installed or fixed on the sensing target or surrounding the sensing target. Therefore, the first indication information may also be referred to as an installation identifier.

As mentioned above, in some implementations, the first network element may be a network element for a sensing service. For example, the first network element may be an SF. Alternatively, the first network element may be an LMF (i.e., the SF and LMF are co-located). The second network element may be a network element that receives a sensing request. For example, the second network element may be a GMLC, an AMF, or an NEF. In this case, before transmitting the first message to the first network element, the second network element may receive a message for requesting a sensing service from a fourth network element (which may be a terminal device, an NEF, an AF, or an SF client). The message may carry the identification information of the first terminal device and the first indication information. That is, in this case, the identification information of the first terminal device and the first indication information in the first message may come from the fourth network element.

To execute a sensing task, it is necessary to select and configure a target sensing node. The methods for selecting and configuring the target sensing node will be exemplified below with reference to Embodiment 1 and Embodiment 2.

### Embodiment 1

FIG. 6 is a schematic flowchart of a method for sensing provided by Embodiment 1.

Referring to FIG. 6, in step S610, the second network element determines location information of the first terminal device based on identification information of the first terminal device. For example, the second network element may trigger a location procedure for the first terminal device based on the identification information of the first terminal device, to determine the location information of the first terminal device. As a more specific example, the second network element may locate the first terminal device via an LMF, to determine the location information of the first terminal device. For example, the second network element may transmit a location request of the first terminal device to the LMF. The location request may carry the identification information of the first terminal device. The location request may be transmitted directly to the LMF, or may be transmitted to the LMF via other network elements. Taking the second network element as a GMLC as an example, the GMLC may transmit the location request of the first terminal device to the LMF via an AMF. After receiving the location request, the LMF may locate the first terminal device according to a certain location algorithm and return the location information of the first terminal device to the second network element. The location information of the first terminal device may be transmitted directly from the LMF to the second network element, or may be transmitted to the second network element via other network elements. Taking the second network element as a GMLC as an example, the LMF may transmit the location information of the first terminal device to the GMLC via an AMF.

In step S620, the second network element transmits a first message to the first network element. The first message includes the identification information of the first terminal device, the first indication information, and the location information of the first terminal device. For the identification information of the first terminal device and the first indication information, refer to the relevant descriptions in FIG. 5, which will not be repeated here.

After receiving the first message, in some implementations, the first network element may proceed to step S630, that is, the first network element determines a target sensing node based on the location information of the first terminal device and/or the identification information of the first terminal device. In other words, the first network element may discover and select the target sensing node based on the location information of the first terminal device and/or the identification information of the first terminal device. The target sensing node mentioned here may be a terminal device or an access network device. It should be noted that the target sensing node may not include the first terminal device. This is because the first terminal device may be close to the sensing target, which could cause signal obstruction and other issues, making it not necessarily suitable as a sensing node.

After determining the target sensing node, in some implementations, the first network element may proceed to step S640, that is, the first network element transmits a fourth message to the target sensing node. The fourth message may be used to assign configuration information of the sensing task to the target sensing node. After receiving the fourth message, the target sensing node may execute the sensing procedure. For example, the target sensing node may receive and/or transmit sensing signals. For another example, the target sensing node may transmit sensing data to the first network element.

In Embodiment 1, the first network element uses the location information of the first terminal device to select and configure the appropriate sensing node, thereby achieving the sensing for a non-terminal device.

### Embodiment 2

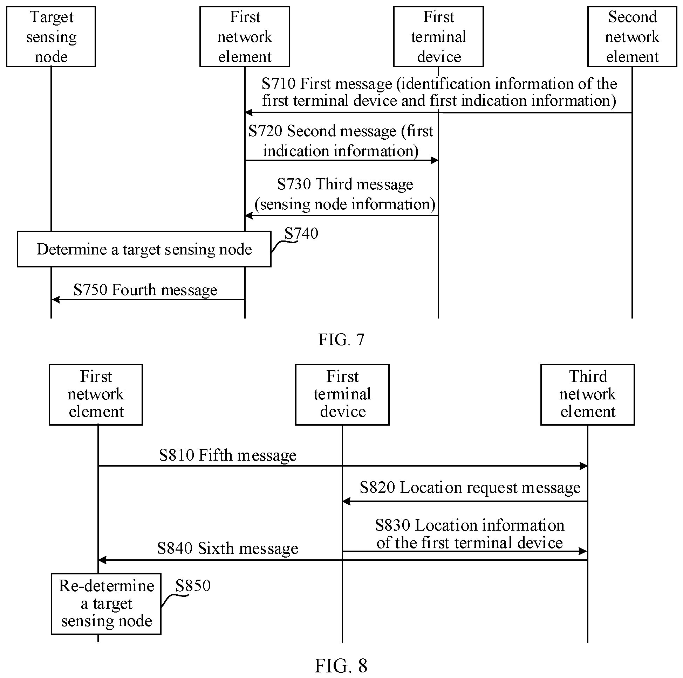

FIG. 7 is a schematic flowchart of a method for sensing provided by Embodiment 2.

Referring to FIG. 7, in step S710, the second network element transmits a first message to the first network element. The first message includes identification information of the first terminal device and first indication information. For the identification information of the first terminal device and the first indication information, refer to the relevant descriptions in FIG. 5, which will not be repeated here. Unlike Embodiment 1, the first message does not include the location information of the first terminal device.

After receiving the first message, in some implementations, the first network element transmits a second message to the first terminal device. The second message includes the first indication information. The second message or the first indication information may be used to trigger the first terminal device to determine a sensing node.

After receiving the second message, in some implementations, the first terminal device may determine a sensing node. For example, the first terminal device may discover and select the sensing node, to determine the sensing node. As a specific example, the first terminal device may interact with other terminal devices via a PC5 interface to select the sensing node from other terminal devices. Alternatively, the first terminal device may monitor the air interface (Uu interface) to select an appropriate radio access network (RAN) node as a sensing node.

After receiving the second message, in some implementations, the first terminal device may proceed to step S730, that is, the first terminal device transmits a third message to the first network element (the third message may be understood as a feedback message for the second message). The third message may include sensing node information. The sensing node information includes identification information of the sensing node and/or location information of the sensing node. The identification information of the sensing node may be identification information of a terminal device or identification information of an access network device. It should be noted that the sensing node information may not include the identification information of the first terminal device. This is because the first terminal device may be close to the sensing target, which could cause signal obstruction and other issues, making it not necessarily suitable as a sensing node.

After receiving the sensing node information from the first terminal device, in some implementations, the first network element may perform step S740, that is, the first network element determines a target sensing node. For example, the first network element may directly use the sensing node indicated by the sensing node information as the target sensing node. Alternatively, in some implementations, the first network element may use the sensing node indicated by the sensing node information as a candidate sensing node, and then determine the target sensing node based on the candidate sensing node and other sensing nodes that are pre-configured for or pre-registered with the first network element. For example, some sensing nodes are deployed by the operator and may be pre-registered with the first network element (such sensing nodes may not be discovered by the first terminal device). Therefore, the first network element may comprehensively consider the candidate sensing node reported by the first terminal device and the sensing nodes pre-registered with the first network element, so as to select an appropriate sensing node as the target sensing node.

After determining the target sensing node, in some implementations, the first network element may proceed to step S750, That is, the first network element transmits a fourth message to the target sensing node. The fourth message may be used to transmit configuration information of the sensing task to the target sensing node, in other words, the fourth message may be used to assign the sensing task to the target sensing node. After receiving the fourth message, the target sensing node may execute the sensing procedure. For example, the target sensing node may receive and/or transmit sensing signals. For another example, the target sensing node may transmit sensing data to the first network element.

Unlike Embodiment 1, in Embodiment 2, the selection (or pre-selection) of the sensing node is performed by the first terminal device, which results in a more accurate selection.

It should be noted that, the present application is not limited to the two methods for selecting and configuring the sensing node illustrated in FIGS. 6 and 7. It is also possible to modify one or more steps of the embodiments illustrated in FIGS. 6 and 7 to obtain other embodiments. For example, as mentioned above, in Embodiment 1 illustrated in FIG. 6, the first message includes the location information of the first terminal device. Optionally, the first message may also not include the location information of the first terminal device. After obtaining the identification information of the first terminal device from the first message, the first network element may independently determine the location information of the first terminal device. For example, the first network element may trigger a location procedure for the first terminal device (e.g., by requesting the location information of the first terminal device from the LMF) based on the identification information of the first terminal device, thereby determining the location information of the first terminal device. The first network element may transmit a location request of the first terminal device directly to the LMF, or it may transmit the location request of the first terminal device indirectly via other network elements. For example, the first network element may transmit the location request of the first terminal device to a GMLC (or transmit it to the GMLC via an NEF), then the GMLC transmits the location request to the LMF (the GMLC may transmit the location request to the LMF via an AMF). After obtaining the location information of the first terminal device, the first network element may proceed with the subsequent steps illustrated in FIG. 6, which are to determine the target sensing node based on the location information of the first terminal device, and assign the configuration information of the sensing task to the target sensing node.

It should be understood that the first terminal device may be in a stationary state or in a mobile state. If the first terminal device is in the mobile state, the previously selected and configured target sensing node may no longer be able to participate in the sensing task. In this case, it is necessary to locate the first terminal device and update the target sensing node based on its current location. Detailed illustrative descriptions of the method for locating the first terminal device and/or updating the target sensing node will be described below with reference to FIG. 8.

Referring to FIG. 8, in step S810, the first network element transmits a fifth message to a third network element. The third network element may be a network element for a location service in a core network, e.g., an LMF. The fifth message may be a location request message of the first terminal device, or the fifth message may be used to subscribe to location information of the first terminal device. It should be understood that the first network element may transmit the fifth message directly to the third network element, or it may transmit the fifth message to the third network element indirectly via other network elements such as a GMLC, NEF, or AMF.

The fifth message may carry one or more of the following: the identification information of the first terminal device and first area information. The first area information may be used to determine whether the first terminal device has left a first area. The first area information may be determined based on the location information of the first terminal device and/or location information of the target sensing node. For example, an area may be defined surrounding the location of a certain target sensing node as the center to serve as the first area. The "first area" mentioned in the embodiments of the present application may refer to an area or a range for sensing the sensing target, therefore, the first area may also be referred to as a sensing area or a sensing range (similarly, the first area information may also be referred to as sensing area information or sensing range information).

After receiving the fifth message, in some implementations, the third network element may perform step S820, that is, the third network element transmits a location request message to the first terminal device. The location request message may carry one or more of the following: the identification information of the first terminal device and the first area information.

After receiving the location request message, in some implementations, in a case where the first terminal device has left the first area, the first terminal device may perform step S830, That is, the first terminal device transmits the location information of the first terminal device to the third network element. The location information refers to the current location information of the first terminal device.

After receiving the location information of the first terminal device, in some implementations, the third network element may perform step S840, That is, the third network element transmits a sixth message to the first network element (the sixth message may be understood as a feedback message for the fifth message). The sixth message is used to notify the first network element that the first terminal device has left the first area. The third network element may transmit the sixth message directly to the first network element, or may transmit the sixth message to the first network element indirectly via other network elements. For example, the third network element may transmit the sixth message to the first network element via a GMLC.

If the first network element receives the sixth message, it indicates that the first terminal device has left the first area, and therefore the previously determined target sensing node is no longer suitable for participating in the sensing task. Consequently, in some implementations, the first network element may re-determine a target sensing node. For example, the first network element may rediscover and reselect a sensing node based on the current location information of the first terminal device. Alternatively, the first network element may re-trigger the first terminal device to discover and select a sensing node surrounding the first terminal. After the target sensing node is re-determined, the sensing procedure can be continued based on the new target sensing node. The embodiment illustrated in FIG. 8 utilizes the first terminal device to identify and locate the sensing target and updates the target sensing node in real time, thereby increasing the reliability of the sensing procedure.

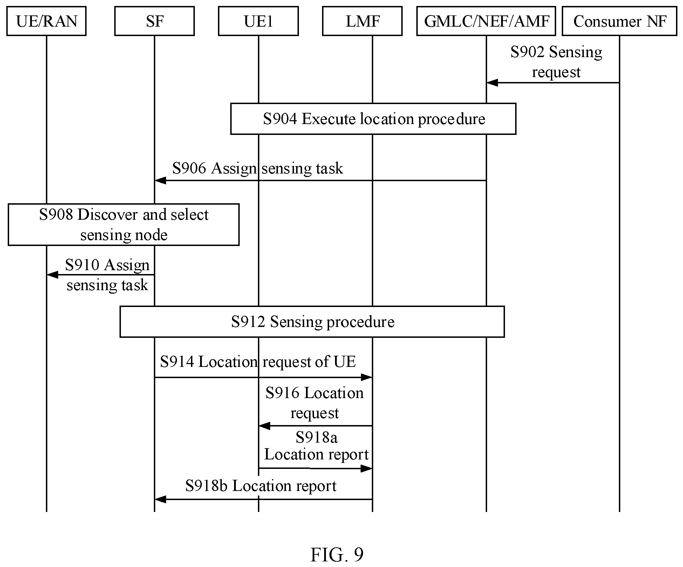

The embodiments of the present application are described in greater detail below with reference to the following specific examples. In the examples illustrated in FIGS. 9 to 11, the SF corresponds to the first network element mentioned above, the GMLC/NEF/AMF corresponds to the second network element mentioned above, the LMF corresponds to the third network element mentioned above, the UE/RAN corresponds to the target sensing node mentioned above, the UE1 corresponds to the first terminal device mentioned above, and the message transmitted from the GMLC/NEF/AMF to the SF corresponds to the first message mentioned above. It should be noted that, the examples illustrated in FIGS. 9 to 11 are provided solely to help those skilled in the art to understand the embodiments of the present application, and are not intended to limit the embodiments of the present application to the specific numerical values or scenarios illustrated therein. It is apparent that those skilled in the art can make various equivalent modifications or variations based on the examples provided in FIGS. 9 to 11, and such modifications or variations also fall within the scope of the embodiments of the present application.

### Example 1:

In Example 1, the general procedure is to first locate UE1 and then execute the sensing procedure. In Example 1, when the Consumer NF transmits a sensing request to a core network, ID information of UE1 and first indication information will be carried in the sensing request. The first indication information indicates that the sensing target is a target surrounding UE1. After receiving the sensing request, the core network first determines the location information of the UE1 through a location procedure, and then selects a sensing node based on the ID information of UE1, the location information of UE1, and the first indication information. The SF subscribes to the location information of UE1 from the LMF. When UE1 leaves the sensing area, the sensing procedure is re-initiated based on the location information of UE1. A more detailed description of Example 1 will be described below with reference to FIG. 9.

Referring to FIG. 9, in step S902, the Consumer NF (which may be a network element such as an SF Client, an AF, a UE, or an NEF) transmits a sensing request to a GMLC/NEF/AMF. The GMLC/NEF/AMF serves as a unified processing network element for receiving a sensing request. In addition to ID information of UE1, the sensing request further includes first indication information. The first indication information is used to indicate that a sensing target is an object or environment surrounding UE1. The ID information of UE1 may also be ID information of a low-power device (such as a wearable device or an AIoT Tag).

In step S904, after receiving the sensing request, the GMLC/NEF/AMF triggers a location procedure for UE1 to obtain location information of UE1. For example, the GMLC may transmit a location request of UE1 directly to an LMF, or the GMLC may transmit a location request of UE1 to the LMF via the AMF. After receiving the location request, the LMF may locate the UE1 according to a certain location algorithm and return the location information of UE1 to the GMLC. The location information of UE1 may be transmitted directly from the LMF to the GMLC, or the location information of UE1 may be transmitted from the LMF to the GMLC via other network elements (e.g., the AMF).

In step S906, the GMLC/NEF/AMF assigns configuration information of a sensing task to an SF. The configuration information includes the ID information of UE1, the location information of UE1, and the first indication information.

In step S908, the SF discovers and selects a sensing node (including a RAN node and/or a UE node) based on the location information of UE1 and the ID information of UE1. UE1 may not be the sensing node.

In step S910, the SF assigns configuration information of the sensing task to the selected sensing node.

In step S912, the sensing procedure is executed. The sensing procedure may include the sensing node transmitting and receiving sensing signals, and the sensing node transmitting sensing data to the SF.

In step S914, the SF subscribes to the location information of UE1 from the LMF (possibly via network elements such as the GMLC/NEF/AMF). The subscription message of the location information includes first area information which is determined based on the location information of UE1 and/or the location information of the sensing node. The first area information may be used to determine whether the UE1 has left the first area.

In step S916, the LMF assigns a location request to UE1. The location request includes the first area information. The first area information is used by UE1 to monitor its own location. If UE1 leaves a first area, it reports the location information of UE1 to the LMF.

In step S918 (including steps S918a and S918b), if UE1 leaves the first area, the LMF will notify the SF of current location information of UE1. For example, the LMF may transmit the current location information of UE1 to the SF via the GMLC. Then, the SF may rediscover and reselect a sensing node based on the current location information of UE1, to execute the subsequent sensing procedure.

Related art does not provide a method for sensing the non-UE target. Example 1 adds additional first indication information and locates UE1 first based on the first indication information, and then executes the sensing procedure, which may effectively identify and determine the non-UE target, thereby completing the sensing procedure.

### Example 2

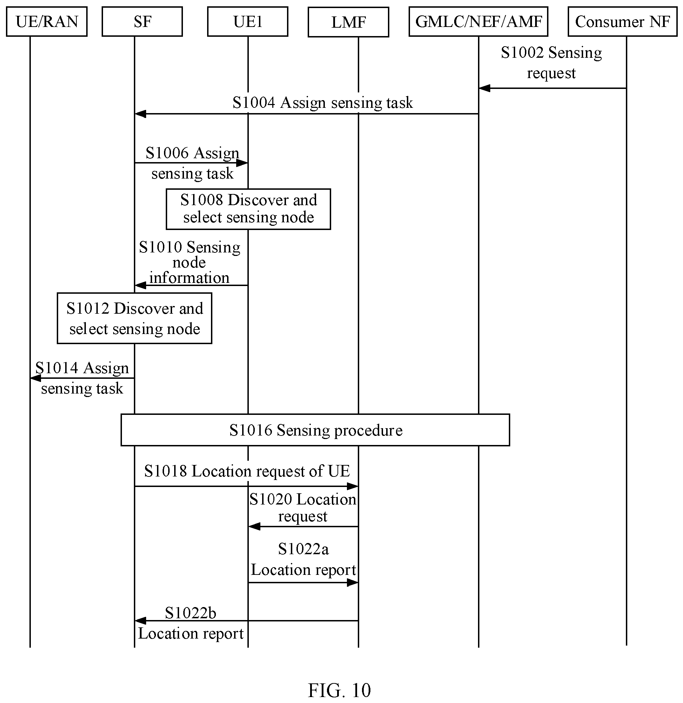

In Example 2, the general procedure is to first execute the sensing procedure and then locate the UE1. When the Consumer NF transmits a sensing request to a core network, ID information of UE1 and first indication information will be carried in the sensing request. The first indication information is used to indicate that a sensing target is a target surrounding UE1. After receiving the sensing request, the SF triggers UE1 to discover and select a sensing nodes surrounding UE1. The SF subscribes to location information of UE1 from the LMF. When UE1 leaves the sensing area, the sensing node may be re-determined based on the current location of UE1, to execute the subsequent sensing procedure. A more detailed description of Example 2 will be described below with reference to FIG. 10.

Referring to FIG. 10, in step S1002, the Consumer NF (which may be a network element such as an SF Client, an AF, a UE, or a NEF) transmits a sensing request to a GMLC/NEF/AMF. The GMLC/NEF/AMF serves as a unified processing network element for receiving a sensing request. In addition to ID information of UE1, the sensing request further includes first indication information. The first indication information is used to indicate that a sensing target is an object or environment surrounding UE1. The ID information of UE1 may also be ID information of a low-power device (such as a wearable device or an AIoT Tag).

In step S1004, the first network element assigns configuration information of a sensing task to an SF. The configuration information includes the ID information of UE1 and the first indication information.

In step S1006, the SF assigns configuration information of the sensing task to UE1. The configuration information includes the first indication information.

In step S1008, UE1 discovers and selects a sensing node. UE1 may interact with other UEs via the PC5 interface, and also obtain information of RAN nodes surrounding UE1 by monitoring the Uu interface.

In step S1010, UE1 reports candidate sensing node information to the SF. The sensing node information may include RAN ID information, the ID information of UE1, and the like. Candidate UEs may not include UE1. In addition, the sensing node information may further include location information of the sensing node.

In step S1012, optionally, the SF discovers and selects the sensing node. The SF may discover and select the sensing node based on the candidate node information reported by the UE1, or the SF may discover and select the sensing node based on other node information pre-configured for or pre-registered with the SF.

In step S1014, the SF assigns configuration information of the sensing task to the selected sensing node.

In step S1016, the sensing procedure is executed. The sensing procedure may include the sensing node transmitting and receiving sensing signals, and the sensing node transmitting sensing data to the SF.

In step S1018, the SF subscribes to the location information of UE1 from the LMF (possibly via network elements such as the GMLC/NEF/AMF). The subscription message of the location information includes first area information which is determined based on the location information of UE1 and/or the location information of the sensing node. The first area information may be used to determine whether UE1 has left the first area.

In step S1020, the LMF assigns a location request to UE1. The location request includes the first area information. The first area information is used by UE1 to monitor its own location. If UE1 leaves a first area, it reports the location information of UE1 to the LMF. For example, the LMF may transmit the current location information of UE1 to the SF via the GMLC.

In step S1022 (including steps S1022a and S1022b), if UE1 leaves the first area, the LMF will notify the SF of current location information of UE1. Then, the SF may rediscover and reselect a sensing node based on the current location information of UE1, to execute the subsequent sensing procedure.

Compared to Example 1, in Example 2, after receiving the first indication information, the SF directly assigns the sensing task, which includes the first indication information, to UE1. After receiving the first indication information, UE1 triggers the discovery and selection of the sensing node surrounding UE1. Compared to Example 1, this approach selects the sensing node more accurately.

### Example 3:

In Example 3, the general procedure is to first locate UE1 and then execute the sensing procedure. In the Example 3, when the Consumer NF transmits a sensing request to a core network, ID information of UE1 and first indication information will be carried in the sensing request. The first indication information indicates that the sensing target is a target surrounding UE1. After receiving the sensing request, the core network first determines the location information of UE1 through a location procedure, and then selects a sensing node based on the ID information of UE1, the location information of UE1, and the first indication information. The SF subscribes to the location information of UE1 from the LMF. When UE1 leaves the sensing area, the sensing procedure is re-initiated based on the location information of UE1. Example 3 is similar to Example 1, the main difference between the two is that in Example 3, the location information of UE1 is determined by the SF.

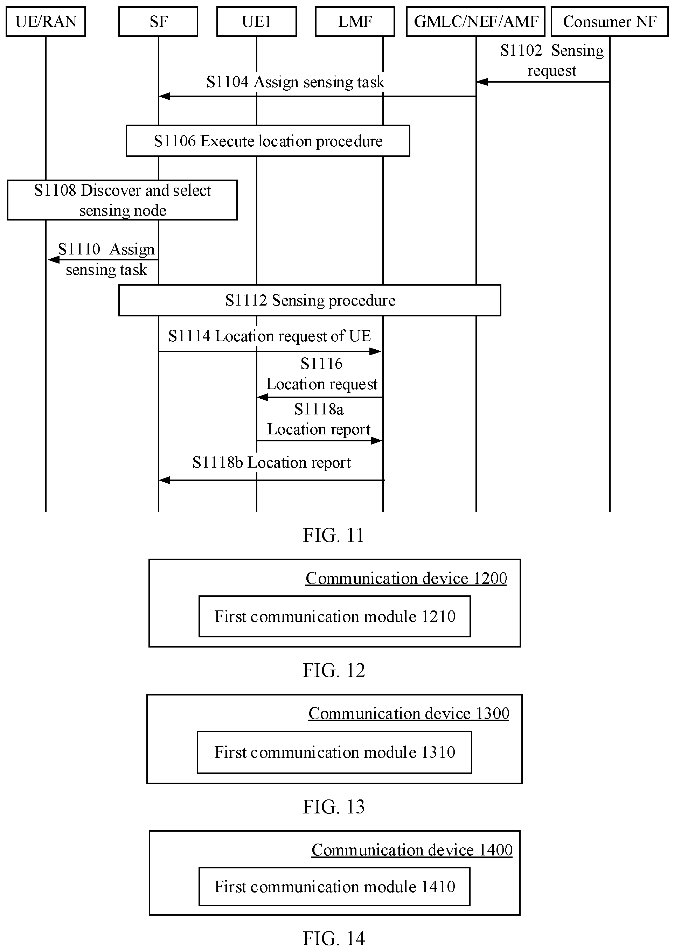

A more detailed description of Example 3 will be described below with reference to FIG. 11.

Referring to FIG. 11, in step S1102, the Consumer NF (which may be a network element such as an SF Client, an AF, a UE, or an NEF) transmits a sensing request to a GMLC/NEF/AMF. The GMLC/NEF/AMF serves as a unified processing network element for receiving a sensing request. In addition to ID information of UE1, the sensing request further includes first indication information. The first indication information is used to indicate that a sensing target is an object or environment surrounding UE1. The ID information of UE1 may also be ID information of a low-power device (such as a wearable device or an AIoT Tag).

In step S1104, the GMLC/NEF/AMF assigns configuration information of a sensing task to an SF. The configuration information includes the ID information of UE1 and the first indication information.

In step S1106, after receiving the sensing request, the SF triggers a location procedure for UE1 to obtain location information of UE1. The SF may transmit a location request of UE1 directly to the LMF, or the SF may transmit the location request of UE1 to the LMF indirectly via other network elements. For example, the SF may transmit the location request of UE1 to the GMLC (or transmit the location request of UE1 to the GMLC via the NEF), and then the GMLC transmits the location request to the LMF (the GMLC may transmit the location request to the LMF via the AMF).

In step S1108, the SF discovers and selects a sensing node (including a RAN node and/or a UE node) based on the location information of UE1 and the ID information of UE1. The UE1 may not be the sensing node.

In step S1110, the SF assigns configuration information of the sensing task to the selected sensing node.

In step S1112, the sensing procedure is executed. The sensing procedure may include the sensing node transmitting and receiving sensing signals, and the sensing node transmitting sensing data to the SF.

In step S1114, the SF subscribes to the location information of UE1 from the LMF (possibly via network elements such as the GMLC/NEF/AMF). The subscription message of the location information includes first area information which is determined based on the location information of UE1 and/or the location information of the sensing node. The first area information may be used to determine whether the UE1 has left the first area.

In step S1116, the LMF assigns a location request to UE1. The location request includes the first area information. The first area information is used by UE1 to monitor its own location. If UE1 leaves a first area, it reports the location information of UE1 to the LMF. For example, the LMF may transmit current location information of UE1 to the SF via the GMLC.

In step S1118 (including steps S1118a and S1118b), if UE1 leaves the first area, the LMF will notify the SF of the current location information of UE1. Then, the SF may rediscover and reselect a sensing node based on the current location information of UE1, to execute the subsequent sensing procedure.

Related art does not provide a method for sensing the non-UE target. Example 3 adds additional first indication information and locates UE1 first based on the first indication information, and then executes the sensing procedure, which may effectively identify and determine the non-UE target, thereby completing the sensing procedure.

The method embodiments of the present application are described in detail above with reference to FIGS. 1 to 11. The apparatus embodiments of the present application will be described in detail with reference to FIGS. 12 to15. It should be understood that the description of the method embodiments corresponds to that of the apparatus embodiments. Therefore, for the aspects not described in detail, please refer to the above method embodiments.

FIG. 12 is a schematic structural diagram of a communication device provided by an embodiment of the present application. The communication device 1200 in FIG. 12 may be the first network element mentioned above. The communication device 1200 may include a first communication module 1210. The first communication module 1210 is configured to receive a first message transmitted by a second network element, where the first message includes identification information of a first terminal device and first indication information, and the first indication information is used to indicate that a sensing target is a target associated with the first terminal device.

In some implementations, the first indication information is used to indicate that the sensing target is environment or an object surrounding the first terminal device.

In some implementations, the first message further includes location information of the first terminal device.

In some implementations, the communication device 1200 further includes:
a first determining module, configured to determine location information of the first terminal device based on the identification information of the first terminal device.

In some implementations, the communication device 1200 further includes:
a second determining module, configured to determine a target sensing node based on the location information of the first terminal device.

In some implementations, the communication device 1200 further includes:
a second communication module, configured to transmit a second message to the first terminal device, where the second message includes the first indication information.

In some implementations, the second message or the first indication information is used to trigger the first terminal device to determine a sensing node.

In some implementations, the communication device 1200 further includes:
a third communication module, configured to receive a third message transmitted by the first terminal device, where the third message includes sensing node information, and the sensing node information includes one or more of the following:
identification information of a sensing node; and
location information of a sensing node.

In some implementations, the communication device 1200 further includes:
a third determining module, configured to determine a target sensing node based on the third message.

In some implementations, the target sensing node does not include the first terminal device.

In some implementations, the communication device 1200 further includes:
a fourth communication module, configured to transmit a fourth message to a target sensing node, where the fourth message is used to request a sensing service.

In some implementations, the communication device 1200 further includes:
a fifth communication module, configured to transmit a fifth message to a third network element, where the fifth message is used to subscribe to location information of the first terminal device.

In some implementations, the fifth message includes first area information, and the first area information is used to determine whether the first terminal device has left a first area.

In some implementations, the first area information is determined based on the location information of the first terminal device and/or location information of a target sensing node.

In some implementations, the communication device 1200 further includes:
a sixth communication module, configured to receive a sixth message transmitted by the third network element, where the sixth message is used to notify the first network element that the first terminal device has left a first area.

In some implementations, the sixth message includes location information of the first terminal device, and the communication device 1200 further includes:
a fourth determining module, configured to re-determine a target sensing node based on the location information of the first terminal device included in the sixth message.

In some implementations, the third network element is a network element for a location service.

In some implementations, the first network element is a network element for a sensing service; and/or, the second network element is a gateway mobile location center, an access and mobility management function, or a network exposure function.

In some implementations, the first network element is a gateway mobile location center, an access and mobility management function, or a network exposure function; and/or, the second network element is a terminal device, a network exposure function, an application function, or a sensing function client.

In some implementations, the first message is used to request a sensing service.

FIG. 13 is a schematic structural diagram of a communication device provided by another embodiment of the present application. The communication device 1300 in FIG. 13 may be the second network element mentioned above. The communication device 1300 may include a first communication module 1310. The first communication module 1310 is configured to transmit a first message to a first network element, where the first message includes identification information of a first terminal device and first indication information, and the first indication information is used to indicate that a sensing target is a target associated with the first terminal device.

In some implementations, the first indication information is used to indicate that the sensing target is environment or an object surrounding the first terminal device.

In some implementations, the first message further includes location information of the first terminal device.

In some implementations, the communication device 1300 further includes:
a first determining module, configured to, before the second network element transmits the first message to the first network element, determine the location information of the first terminal device based on the identification information of the first terminal device.

In some implementations, the communication device 1300 further includes:
a second communication module, configured to receive a message transmitted by a fourth network element, where the message transmitted by the fourth network element is used to request a sensing service, and the message transmitted by the fourth network element includes the identification information of the first terminal device and the first indication information.

In some implementations, the fourth network element is a terminal device, a Network Exposure Function, an Application Function, or a sensing function client.

In some implementations, the first network element is a network element for a sensing service; and/or, the second network element is a gateway mobile location center, an access and mobility management function, or a network exposure function.

In some implementations, the first network element is a gateway mobile location center, an access and mobility management function, or a network exposure function; and/or, the second network element is a terminal device, a network exposure function, an application function, or a sensing function client.

In some implementations, the first message is used to request a sensing service.

FIG. 14 is a schematic structural diagram of a communication device provided in yet another embodiment of the present application. The communication device 1400 of FIG. 14 may be the first terminal device mentioned above. The communication device 1400 may include a first communication module 1410. The first communication module 1410 is configured to receive a second message transmitted by a first network element, where the second message includes first indication information, and the first indication information is used to indicate that a sensing target is a target associated with the first terminal device.

In some implementations, the first indication information is used to indicate that the sensing target is environment or an object surrounding the first terminal device.

In some implementations, the second message or the first indication information is used to trigger the first terminal device to determine a sensing node.

In some implementations, the communication device 1400 further includes:
a second communication module, configured to transmit a third message to the first network element, where the third message includes sensing node information, and the sensing node information includes one or more of the following:
identification information of the sensing node; and
location information of the sensing node.

In some implementations, the communication device 1400 further includes:
a third communication module, configured to receive a location request message transmitted by a third network element, where the location request message includes first area information, and the first area information is used to determine whether the first terminal device has left a first area.

In some implementations, the communication device 1400 further includes:
a fourth communication module, configured to, in a case where the first terminal device has left the first area, transmit location information of the first terminal device to the third network element.

In some implementations, the third network element is a network element for a location service.

In some implementations, the first network element is a network element for a sensing service.

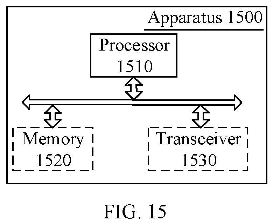

FIG. 15 is a schematic structural diagram of a communication apparatus to which embodiments of the present application can be applied. The dotted lines in FIG. 15 represent that the unit or module is optional. The apparatus 1500 may be configured to implement the methods described in the above method embodiments. The apparatus 1500 may be a chip, a terminal device, or a network device.

The apparatus 1500 may include one or more processors 1510. The processor 1510 can enable the apparatus 1500 to implement the methods described in the above method embodiments. A processor 1510 may be a general purpose processor or a special purpose processor. For example, the processor may be a central processing unit (CPU). Alternatively, the processor may also be other general-purpose processors, or a digital signal processor (DSP), an application specific integrated circuit (ASIC), a field programmable gate array (FPGA), or other programmable logic devices, a discrete gate or a transistor logic device, a discrete hardware component, or the like. The general purpose processor may be a microprocessor, or the processor may also be any conventional processor.

The apparatus 1500 may further include one or more memories 15520. A memory 1520 stores a program that can be executed by the processor 1510, enabling the processor 1510 to perform the methods described in the above method embodiments. The memory 1520 may be independent of the processor 1510 or integrated into the processor 1510.

The apparatus 1500 may further include a transceiver 1530. The processor 1510 may communicate with other devices or chips via the transceiver 1530. For example, the processor 1510 may transmit data to other devices or chips and receive data from other devices or chips via the transceiver 1530.

The embodiments of the present application further provide a computer-readable storage medium for storing a program. The computer-readable storage medium can be applied to the first network element, the second network element, or the first terminal device provided by the embodiments of the present application, and the program enables the computer to perform the methods performed by the first network element, the second network element, or the first terminal device in the various embodiments of the present application.

The embodiments of the present application further provide a computer program product. The computer program product includes a program. The computer program product can be applied to the first network element, the second network element, or the first terminal device provided by the embodiments of the present application, and the program enables the computer to perform the methods performed by the first network element, the second network element, or the first terminal device in the various embodiments of the present application.

The embodiments of the present application further provide a computer program. The computer program can be applied to the first network element, the second network element, or the first terminal device provided by the embodiments of the present application, and the computer program enables a computer to perform the methods performed by the first network element, the second network element, or the first terminal device in the various embodiments of the present application.

It should be understood that the terms "system" and "network" in the present application can be used interchangeably. In addition, the terms used in the present application are only for explaining specific embodiments of the present application and are not intended to limit the present application. The terms "first," "second," "third," "fourth," etc., used in the specification, claims, and accompanying drawings of the present application are used to distinguish different objects, not to describe a specific order. Furthermore, the terms "comprise," "include," "have" and any variations thereof, are intended to cover a non-exclusive inclusion.

In the embodiments of the present application, the term "indicate" may mean a direct indication, an indirect indication, or represent that there is an associative relationship. For example, A indicating B may mean that A directly indicates B, e.g., that B may be obtained through A; or it may mean that A indirectly indicates B, e.g., that A indicates C, and B may be obtained through C; or it may mean that an associative relationship exists between A and B.

In the embodiments of the present application, "B corresponding to A" means that B is associated with A, and B may be determined based on A. However, it should also be understood that B being determined based on A does not mean that B is determined based solely on A, B may also be determined based on A and/or other information.

In the embodiments of the present application, the term "correspond" may refer to a direct correspondence or indirect correspondence between the two, or refer to an association relationship between the two, or refer to relationships such as indicating and being indicated, or configuring and being configured.

In the embodiments of the present application, "predefined" or "preconfigured" may be implemented by pre-storing corresponding code, table, or other means of indicating related information in a device (for example, including a terminal device and a network device). The specific implementation manner thereof is not limited in the present application. For example, the term "predefined" may refer to one defined in a protocol.

In the embodiments of the present application, the "protocol" may refer to a standard protocol in the field of communications, such as the LTE protocol, the NR protocol, and related protocols applied in future communication systems, which is not limited in the present application.

In the embodiments of the present application, the term "and/or" is merely used to describe an association relationship between associated objects, which refer to that there may be three relationships between the related objects. For example, "A and/or B" may represent that there are three cases: A exists alone, both A and B exist, and B exists alone. In addition, the character "/" herein generally indicates that related objects before and after this character are in an "or" relationship.

In the various embodiments of the present application, the sequence numbers of the above processes does not imply an order of execution. The execution order of the processes should be determined based on their functions and inherent logic, and should not constitute any limitation on the implementation process of the embodiments of the present application.

In the several embodiments provided by the present application, it should be understood that the disclosed systems, apparatuses, and methods may be implemented in other ways. For example, the apparatus embodiments described above are merely illustrative. For example, the division of the units is only a logical function division. In actual implementation, there may be other division manners. For example, multiple units or components may be combined or integrated into another system, or some features may be ignored or not executed. Another point is that the mutual coupling or direct coupling or communication connections shown or discussed may be an indirect coupling or communication connection through some interfaces, apparatuses or units, and may be electrical, mechanical, or other forms.

The unit described as a separate component may or may not be physically separate. The components shown as units may or may not be physical units, that is, they may be located in one place, or they may be distributed across multiple network units. Some or all of these units may be selected to achieve the purpose of the embodiments according to actual requirements.

In addition, the functional units in the various embodiments of the present application may be integrated into one processing unit, or each unit may exist physically separately, or two or more units may be integrated into one unit.

In the above embodiments, it may be implemented entirely or partially by software, hardware, firmware, or any combination thereof. When implemented using software, it may be implemented in whole or in part as a computer program product. The computer program product includes one or more computer instructions. When the computer program instructions are loaded and executed on a computer, all or part of the processes or functions described in the embodiments of the present application are generated. The computer may be a general purpose computer, a special purpose computer, a computer network, or other programmable devices. The computer instructions may be stored in a computer-readable storage medium or may be transmitted from one computer-readable storage medium to another computer-readable storage medium. For example, the computer instructions may be transmitted from one website station, computer, server, or data center to another website station, computer, server, or data center via wired mean (e.g., coaxial cable, optical fiber, digital subscriber line (DSL)) or wireless mean (e.g., infrared, wireless, or microwave). The computer-readable storage medium may be any available medium that a computer can read, or a data storage device such as a server or data center that integrates one or more available media. An available medium may be a magnetic medium (e.g., floppy disk, hard disk, magnetic tape), optical medium (e.g., digital video disc (DVD)), or semiconductor medium (e.g., solid state disk (SSD)).

The above content is only specific implementations of the present application, but the protection scope of the present application is not limited thereto, and within the technical scope disclosed in the present application, any skilled familiar with this technical field may easily think of changes or replacements should be all covered within the protection scope of the present application. Therefore, the protection scope of the present application should be subject to the protection scope of the claims.

## Claims

1. A method for sensing, comprising:
receiving, by a first network element, a first message transmitted by a second network element, wherein the first message includes identification information of a first terminal device and first indication information, and the first indication information is used to indicate that a sensing target is a target associated with the first terminal device.

2. The method according to claim 1, wherein the first indication information is used to indicate that the sensing target is environment or an object surrounding the first terminal device.

3. The method according to claim 1 or 2, wherein the first message further includes location information of the first terminal device.

4. The method according to claim 1 or 2, further comprising:
determining, by the first network element, location information of the first terminal device based on the identification information of the first terminal device.

5. The method according to claim 3 or 4, further comprising:
determining, by the first network element, a target sensing node based on the location information of the first terminal device.

6. The method according to claim 1, further comprising:
transmitting, by the first network element, a second message to the first terminal device, wherein the second message includes the first indication information.

7. The method according to claim 6, wherein the second message or the first indication information is used to trigger the first terminal device to determine a sensing node.

8. The method according to claim 6 or 7, further comprising:
receiving, by the first network element, a third message transmitted by the first terminal device, wherein the third message includes sensing node information, and the sensing node information includes one or more of:
identification information of a sensing node; and
location information of a sensing node.

9. The method according to claim 8, further comprising:
determining, by the first network element, a target sensing node based on the third message.

10. The method according to claim 5 or 9, wherein the target sensing node does not include the first terminal device.

11. The method according to any one of claims 1 to 10, further comprising:
transmitting, by the first network element, a fourth message to a target sensing node, wherein the fourth message is used to request a sensing service.

12. The method according to any one of claims 1 to 11, further comprising:
transmitting, by the first network element, a fifth message to a third network element, wherein the fifth message is used to subscribe to location information of the first terminal device.

13. The method according to claim 12, wherein the fifth message includes first area information, and the first area information is used to determine whether the first terminal device has left a first area.

14. The method according to claim 13, wherein the first area information is determined based on the location information of the first terminal device and/or location information of a target sensing node.

15. The method according to any one of claims 12 to 14, further comprising:
receiving, by the first network element, a sixth message transmitted by the third network element, wherein the sixth message is used to notify the first network element that the first terminal device has left a first area.

16. The method according to claim 15, wherein the sixth message includes location information of the first terminal device, and the method further comprises:
re-determining, by the first network element, a target sensing node based on the location information of the first terminal device included in the sixth message.

17. The method according to any one of claims 12 to 16, wherein the third network element is a network element for a location service.

18. The method according to any one of claims 1 to 17, wherein
the first network element is a network element for a sensing service; and/or
the second network element is a gateway mobile location center, an access and mobility management function, or a network exposure function.

19. The method according to claim 1, wherein
the first network element is a gateway mobile location center, an access and mobility management function, or a network exposure function; and/or
the second network element is a terminal device, a network exposure function, an application function, or a sensing function client.

20. The method according to any one of claims 1 to 19, wherein the first message is used to request a sensing service.

21. A method for sensing, comprising:
transmitting, by a second network element, a first message to a first network element, wherein the first message includes identification information of a first terminal device and first indication information, and the first indication information is used to indicate that a sensing target is a target associated with the first terminal device.

22. The method according to claim 21, wherein the first indication information is used to indicate that the sensing target is environment or an object surrounding the first terminal device.

23. The method according to claim 21 or 22, wherein the first message further includes location information of the first terminal device.

24. The method according to claim 23, wherein before transmitting, by the second network element, the first message to the first network element, the method further comprises:
determining, by the second network element, the location information of the first terminal device based on the identification information of the first terminal device.

25. The method according to any one of claims 21 to 24, further comprising:
receiving, by the second network element, a message transmitted by a fourth network element, wherein the message transmitted by the fourth network element is used to request a sensing service, and the message transmitted by the fourth network element includes the identification information of the first terminal device and the first indication information.

26. The method according to claim 25, wherein the fourth network element is a terminal device, a network exposure function, an application function, or a sensing function client.

27. The method according to any one of claims 21 to 26, wherein
the first network element is a network element for a sensing service; and/or
the second network element is a gateway mobile location center, an access and mobility management function, or a network exposure function.

28. The method according to claim 21, wherein
the first network element is a gateway mobile location center, an access and mobility management function, or a network exposure function; and/or
the second network element is a terminal device, a network exposure function, an application function, or a sensing function client.

29. The method according to any one of claims 21 to 28, wherein the first message is used to request a sensing service.

30. A method for sensing, comprising:
receiving, by a first terminal device, a second message transmitted by a first network element, wherein the second message includes first indication information, and the first indication information is used to indicate that a sensing target is a target associated with the first terminal device.

31. The method according to claim 30, wherein the first indication information is used to indicate that the sensing target is environment or an object surrounding the first terminal device.

32. The method according to claim 30 or 31, wherein the second message or the first indication information is used to trigger the first terminal device to determine a sensing node.

33. The method according to any one of claims 30 to 32, further comprising:
transmitting, by the first terminal device, a third message to the first network element, wherein the third message includes sensing node information, and the sensing node information includes one or more of:
identification information of a sensing node; and
location information of a sensing node.

34. The method according to any one of claims 30 to 33, further comprising:
receiving, by the first terminal device, a location request message transmitted by a third network element, wherein the location request message includes first area information, and the first area information is used to determine whether the first terminal device has left a first area.

35. The method according to claim 34, further comprising:
in a case where the first terminal device has left the first area, transmitting, by the first terminal device, location information of the first terminal device to the third network element.

36. The method according to claim 34 or 35, wherein the third network element is a network element for a location service.

37. The method according to any one of claims 30 to 36, wherein the first network element is a network element for a sensing service.

38. A communication device, wherein the first communication device is a first network element, and the first network element comprises:
a first communication module, configured to receive a first message transmitted by a second network element, wherein the first message includes identification information of a first terminal device and first indication information, and the first indication information is used to indicate that a sensing target is a target associated with the first terminal device.

39. The communication device according to claim 38, wherein the first indication information is used to indicate that the sensing target is environment or an object surrounding the first terminal device.

40. The communication device according to claim 38 or 39, wherein the first message further includes location information of the first terminal device.

41. The communication device according to claim 38 or 39, wherein the communication device further comprises:
a first determining module, configured to determine location information of the first terminal device based on the identification information of the first terminal device.

42. The communication device according to claim 40 or 41, wherein the communication device further comprises:
a second determining module, configured to determine a target sensing node based on the location information of the first terminal device.

43. The communication device according to claim 38, wherein the communication device further comprises:
a second communication module, configured to transmit a second message to the first terminal device, wherein the second message includes the first indication information.

44. The communication device according to claim 43, wherein the second message or the first indication information is used to trigger the first terminal device to determine a sensing node.

45. The communication device according to claim 43 or 44, wherein the communication device further comprises:
a third communication module, configured to receive a third message transmitted by the first terminal device, wherein the third message includes sensing node information, and the sensing node information includes one or more of:
identification information of a sensing node; and
location information of a sensing node.

46. The communication device according to claim 45, wherein the communication device further comprises:
a third determining module, configured to determine a target sensing node based on the third message.

47. The communication device according to claim 42 or 46, wherein the target sensing node does not include the first terminal device.

48. The communication device according to any one of claims 38 to 47, wherein the communication device further comprises:
a fourth communication module, configured to transmit a fourth message to a target sensing node, wherein the fourth message is used to request a sensing service.

49. The communication device according to any one of claims 38 to 48, wherein the communication device further comprises:
a fifth communication module, configured to transmit a fifth message to a third network element, wherein the fifth message is used to subscribe to location information of the first terminal device.

50. The communication device according to claim 49, wherein the fifth message includes first area information, and the first area information is used to determine whether the first terminal device has left a first area.

51. The communication device according to claim 50, wherein the first area information is determined based on the location information of the first terminal device and/or location information of a target sensing node.

52. The communication device according to any one of claims 49 to 51, wherein the communication device further comprises:
a sixth communication module, configured to receive a sixth message transmitted by the third network element, wherein the sixth message is used to notify the first network element that the first terminal device has left a first area.

53. The communication device according to claim 52, wherein the sixth message includes location information of the first terminal device, and the communication device further comprises:
a fourth determining module, configured to re-determine a target sensing node based on the location information of the first terminal device included in the sixth message.

54. The communication device according to any one of claims 49 to 53, wherein the third network element is a network element for a location service.

55. The communication device according to any one of claims 38 to 54, wherein
the first network element is a network element for a sensing service; and/or
the second network element is a gateway mobile location center, an access and mobility management function, or a network exposure function.

56. The communication device according to claim 38, wherein
the first network element is a gateway mobile location center, an access and mobility management function, or a network exposure function; and/or
the second network element is a terminal device, a network exposure function, an application function, or a sensing function client.

57. The communication device according to any one of claims 38 to 56, wherein the first message is used to request a sensing service.

58. A communication device, wherein the communication device is a second network element, and the second network element comprises:
a first communication module, configured to transmit a first message to a first network element, wherein the first message includes identification information of a first terminal device and first indication information, and the first indication information is used to indicate that a sensing target is a target associated with the first terminal device.

59. The communication device according to claim 58, wherein the first indication information is used to indicate that the sensing target is environment or an object surrounding the first terminal device.

60. The communication device according to claim 58 or 59, wherein the first message further includes location information of the first terminal device.

61. The communication device according to claim 60, wherein the communication device further comprises:
a first determining module, configured to, before the second network element transmits the first message to the first network element, determine the location information of the first terminal device based on the identification information of the first terminal device.

62. The communication device according to any one of claims 58 to 61, wherein the communication device further comprises:
a second communication module, configured to receive a message transmitted by a fourth network element, wherein the message transmitted by the fourth network element is used to request a sensing service, and the message transmitted by the fourth network element includes the identification information of the first terminal device and the first indication information.

63. The communication device according to claim 62, wherein the fourth network element is a terminal device, a network exposure function, an application function, or a sensing function client.

64. The communication device according to any one of claims 58 to 63, wherein
the first network element is a network element for a sensing service; and/or
the second network element is a gateway mobile location center, an access and mobility management function, or a network exposure function.

65. the communication device according to claim 58, wherein
the first network element is a gateway mobile location center, an access and mobility management function, or a network exposure function; and/or
the second network element is a terminal device, a network exposure function, an application function, or a sensing function client.

66. The communication device according to any one of claims 58 to 65, wherein the first message is used to request a sensing service.

67. A communication device, wherein the communication device is a first terminal device, and the first terminal device comprises:
a first communication module, configured to receive a second message transmitted by a first network element, wherein the second message includes first indication information, and the first indication information is used to indicate that a sensing target is a target associated with the first terminal device.

68. The communication device according to claim 67, wherein the first indication information is used to indicate that the sensing target is environment or an object surrounding the first terminal device.

69. The communication device according to claim 67 or 68, wherein the second message or the first indication information is used to trigger the first terminal device to determine a sensing node.

70. The communication device of any one of claims 67 to 69, wherein the communication device further comprises:
a second communication module, configured to transmit a third message to the first network element, wherein the third message includes sensing node information, and the sensing node information includes one or more of:
identification information of a sensing node; and
location information of a sensing node.

71. The communication device of any one of claims 67 to 70, wherein the communication device further comprises:
a third communication module, configured to receive a location request message transmitted by a third network element, wherein the location request message includes first area information, and the first area information is used to determine whether the first terminal device has left a first area.

72. The communication device of claim 71, wherein the communication device further comprises:
a fourth communication module, configured to, in a case where the first terminal device has left the first area, transmit location information of the first terminal device to the third network element.

73. The communication device of claim 71 or 72, wherein the third network element is a network element for a location service.

74. The communication device of any one of claims 67 to 73, wherein the first network element is a network element for a sensing service.

75. A communication device, comprising a transceiver, a memory, and a processor, wherein the memory is configured to store a program, and the processor is configured to invoke the program stored in the memory and control the transceiver to receive or transmit a signal, to enable the communication device to perform the method according to any one of claims 1 to 20, 21 to 29, or 30 to 37.

76. An apparatus, comprising a processor configured to invoke a program from a memory, to enable the apparatus to perform the method according to any one of claims 1 to 20, 21 to 29, or 30 to 37.

77. A chip, comprising a processor configured to invoke a program from a memory, to enable a device equipped with the chip to perform the method according to any one of claims 1 to 20, 21 to 29, or 30 to 37.

78. A computer-readable storage medium, having a program stored thereon, wherein the program enables a computer to perform the method according to any one of claims 1 to 20, 21 to 29, or 30 to 37.

79. A computer program product, comprising a program, wherein the program enables a computer to perform the method according to any one of claims 1 to 20, 21 to 29, or 30 to 37.

80. A computer program, wherein the computer program enables a computer to perform the method according to any one of claims 1 to 20, 21 to 29, or 30 to 37.
